# EUROPEAN PATENT SPECIFICATION

(11) **EP 3 154 074 B1**
(45) Date of publication and mention of the grant of the patent: **20.03.2019**
(21) Application number: 14893975.4
(22) Date of filing: 06.06.2014
(51) Int. Cl.: H01H 73/18, H01H 9/44, H01H 50/38

(54) **SWITCH DEVICE**
SCHALTVORRICHTUNG
DISPOSITIF DE COMMUTATION

(43) Date of publication of application: 12.04.2017
(73) Proprietor: Mitsubishi Electric Corporation, Chiyoda-ku Tokyo 100-8310 (JP)
(72) Inventor: KOKURA, Kentaro, Tokyo 100-8310 (JP); MIYOSHI, Nobuo, Tokyo 100-8310 (JP); KOHI, Yuta, Tokyo 100-8310 (JP); WATANABE, Shinya, Tokyo 100-8310 (JP); SAGARA, Yuta, Tokyo 100-8310 (JP)
(74) Representative: Diehl & Partner GbR
(86) International application number: PCT/JP2014/065075
(87) International publication number: WO 2015/186245

(56) References cited:
- EP-A1- 2 533 262
- WO-A1-2013/108291
- FR-A5- 2 129 216
- JP-A- 2009 087 918
- JP-A- 2012 064 584
- JP-A- 2013 235 748
- US-A1- 2014 062 627

## Description

### TECHNICAL FIELD

The present invention relates to switch devices, such as a switch element, a switch, a circuit breaker, an electromagnetic contactor, and a relay, which interrupts current.

### BACKGROUND ART

In a switch device, an arc generated between contact points is extended to enhance arc resistance and an arc voltage is raised to a higher voltage to interrupt current. More particularly, a switch device for direct current (DC) needs to be interrupted by raising an arc voltage higher than a power supply voltage and generating a current zero point; and therefore, a technique that extends the arc is important. In a known art, generally, in order to extend an arc, a line of magnetic force of a permanent magnet is made to interlink with the arc and a Lorentz force is made to act on the arc; and thus, the length of the arc is extended (for example, see patent document 1).

### PRIOR ART DOCUMENT

### PATENT DOCUMENT

Patent document 2 discloses an electromagnetic contactor including a pair of fixed contacts and a movable contact. The pair of fixed contacts each includes a support conductor portion supported by an upper plate of a contact housing case, and a contact conductor portion connected to an end portion of the support conductor portion. The contact conductor portion includes a contact plate formed with a contact portion, and a connecting plate portion formed on an outer end portion of the contact plate portion and extending to the upper plate side. The movable contact is mounted on a shaft connected to a drive portion.

Patent document 3 discloses an electromagnetic relay including a fixed contact, a movable contact, an electric magnet causing the movable contact to contact the fixed contact by applying a force via an arming unit, a magnet generating a magnetic field between the fixed contact and the movable contact, and magnetic yokes arranged in parallel to interpose the fixed contact and the movable contact between the yokes and to apply the magnetic field to an area where the fixed contact and the movable contact exist, wherein insulating portions are provided on inner surfaces of the yokes.
Patent document 1: JP 2009-87918 A
Patent document 2: US 2014/0062627 A1
Patent document 3: EP 2 533 262 A1

### DISCLOSURE OF THE INVENTION

### PROBLEMS TO BE SOLVED BY THE INVENTION

In the switch device mounted with the magnet in an arc extinguishing chamber, a problem exists in that if a current conduction direction is reversed in order to extinguish the arc, the driving direction of the arc is reversed and accordingly interruption reliability is deteriorated. Furthermore, although there is means that expands an arc extinguishing space so as to be able to interrupt even when the arc is driven in the opposite direction, a problem exists in that the device increase in size for this means. Furthermore, not only magnetic drive action is difficult to act on the arc that is driven and extended to the outer side than a surface opposite the magnetic pole surface of the magnet, but also the line of magnetic force generated from the magnet causes an electromagnetic force in an unexpected direction; and accordingly, interruption reliability is deteriorated.

In the foregoing switch device, in order to make a desired Lorentz force act on the arc, a line of magnetic force directed in a uniform direction needs to be acted on the action surface of the Lorentz force. In order to make the line of magnetic force directed in the uniform direction interlink with the arc, the magnetic pole surface of the permanent magnet has to be larger than the action surface of the Lorentz force; and accordingly, it results in a high cost configuration and becomes difficult to secure an arrangement space.

Furthermore, the line of magnetic force generated from the permanent magnet generates a Lorentz force directed in an unexpected direction with respect to an arc placed at a position not opposite the magnetic pole surface of the permanent magnet; and accordingly, interruption reliability is deteriorated and, at worst, it causes an accident that becomes impossible to interrupt. In the switch device mounted with the known permanent magnet, in most cases, the arc is extended to the outer side than the surface opposite the permanent magnet and it results in less interruption reliability in the foregoing switch device.

Furthermore, in order to make the line of magnetic force from the permanent magnet form even on the outer side than the surface opposite the permanent magnet, a magnetic yoke may be used; however, the Lorentz force generated by the line of magnetic force from the permanent magnet acts in the opposite direction if a current direction is changed. Accordingly, in this case, if reverse connection is made, it becomes difficult to interrupt and causes an accident. In order to avoid the accident, an extension space in which the arc can be sufficiently extended and the magnetic yoke have to be mounted even when the current direction is reversed and the arc is moved in the opposite direction, and a problem exists in that the switch device increases in size.

This invention has been made to solve the problems described above, and an object of the present invention is to obtain a switch device that can secure sufficient interruption reliability even in the case of using a small magnet regardless of a current direction.

### MEANS FOR SOLVING THE PROBLEMS

According to the present invention, there is provided a switch device as set forth in claim 1. Further embodiments are inter alia disclosed in the dependent claims. In particular the switch device includes: a fixed contact having a fixed contact point; a movable contact having a movable contact point; an opening/closing mechanism portion that performs the opening/closing operation of the fixed contact point and the movable contact point; a magnet; and a long-sized magnetic body which comes into contact with the magnetic pole surface of the magnet at one end portion and is extended between the magnet and at least either one of the fixed contact and the movable contact. In the switch device, at least either one of the fixed contact and the movable contact is integrally molded with the magnetic body with magnetic material to provide a suction bar integrated contact.

### ADVANTAGEOUS EFFECT OF THE INVENTION

According to the switch device of the present invention, regardless of a current direction, an arc generated between the contacts can be driven to the direction of the magnet along the side surface of the suction bar that is the long-sized magnetic body. In this case, the arc travels and extends toward the direction of the magnet while being driven along the side surface of the suction bar and therefore the arc is rapidly cooled, whereby it becomes possible to configure the switch device with inexpensive price and small size while maintaining high interruption reliability even when a current of opposite polarity flows.

Furthermore, the fixed contact and the suction bar are integrally molded; whereby, not only the number of components can be reduced, but also a line of magnetic force generated from the magnet can be efficiently guided to the vicinity of the fixed contact point and therefore the arc generated during open-contact is promptly driven and extended and the contact points can be suppressed from being worn.

The foregoing and other objects, features, and advantageous effects of the present invention will become more apparent from detailed description in the following embodiments and description in the accompanying drawings.

### BRIEF DESCRIPTION OF THE DRAWINGS

FIG. 1 is a sectional side view schematically showing the relevant part configuration of an arc extinguishing chamber portion in an open-contact state of a switch device showing a basic technique of the present invention;
FIG. 2 are explanation views for explaining the arc extinguishing operation of an arc of the switch device of FIG. 1;
FIG. 3 is a sectional side view schematically showing the relevant part configuration of an arc extinguishing chamber portion in an open-contact state of a switch device in Embodiment 1 of the present invention;
FIG. 4 is a sectional side view schematically showing the relevant part configuration of an arc extinguishing chamber portion in an open-contact state of a switch device in Embodiment 2 of the present invention;
FIG. 5 is a sectional side view schematically showing the relevant part configuration of an arc extinguishing chamber portion in an open-contact state of a switch device in Embodiment 3 of the present invention;
FIG. 6 is a perspective view showing a suction bar integrated contact of a switch device in Embodiment 4 of the present invention;
FIG. 7 is a sectional side view schematically showing the relevant part configuration of an arc extinguishing chamber portion in an open-contact state of a switch device in Embodiment 5 of the present invention; and
FIG. 8 is a sectional side view schematically showing the relevant part configuration of an arc extinguishing chamber portion in an open-contact state of a switch device in Embodiment 6 of the present invention.

### MODE FOR CARRYING OUT THE INVENTION

Hereinafter, respective embodiments of the present invention will be described based on drawings. Incidentally, the same reference numerals as those shown in the respective drawings represent identical or corresponding portions and their overlapping description will be omitted.

### Embodiment 1.

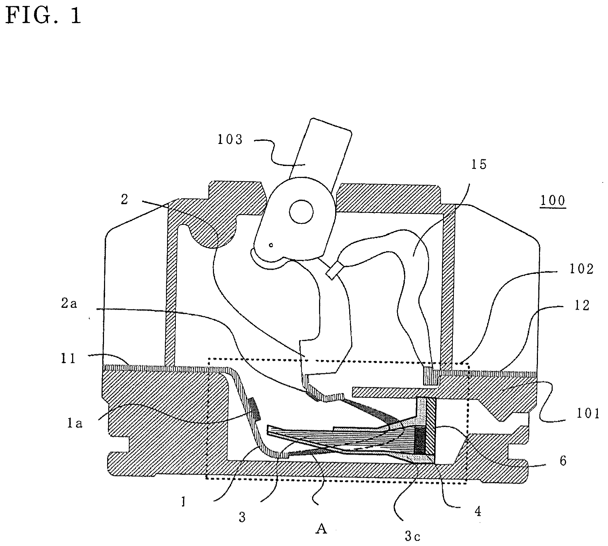

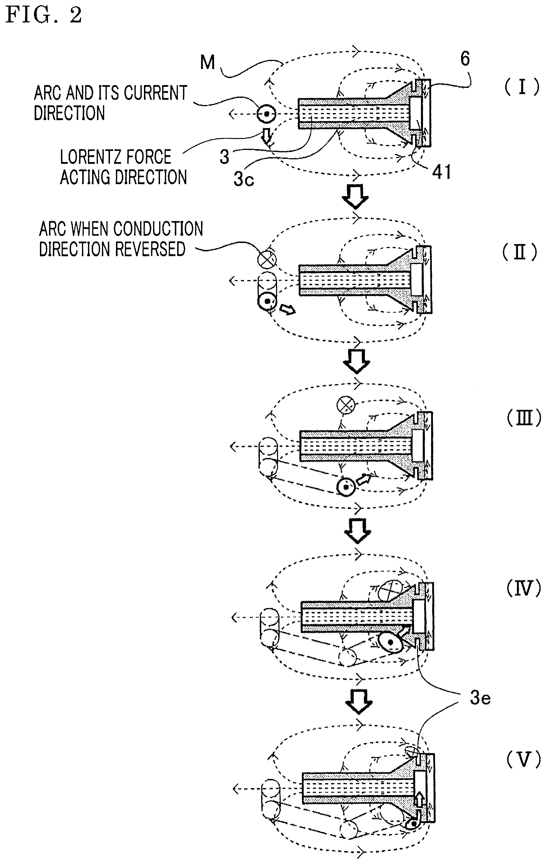

FIG. 1 and FIG. 2 are those showing a basic technique of the present invention; FIG. 1 is a sectional side view showing the relevant part configuration of an opening/closing mechanism portion and an arc extinguishing chamber portion in an open-contact state of a switch device; and FIG. 2 is an explanation view for explaining the arc extinguishing operation of an arc of the switch device of FIG. 1.

As shown in FIG. 1, a basic switch device 100 of the present invention includes: a fixed contact 1 having a fixed contact point 1a; a movable contact 2 having a movable contact point 2a; an opening/closing mechanism portion 103 that performs the opening/closing operation of the fixed contact point 1a and the movable contact point 2a; a magnet 4 that generates a magnetic field which is for extending an arc generated between the fixed contact 1 and the movable contact 2 when the fixed contact point 1a and the movable contact point 2a are separated; and a suction bar 3 that is a long-sized magnetic body, in which one end portion comes into contact with the magnetic pole surface of the magnet 4 and the other end portion is placed on the side of the fixed contact 1 and is extended between the fixed contact 1 and the magnet 4. Then, the other end portion of the suction bar 3 is arranged so as to come close to an arc generation region between the fixed contact 1 and the movable contact 2. Basic configuration is made up of the magnet 4 which controls and extends an arc A that is generated between both contacts 1 and 2 when both contact points 1a and 2a are separated; and the suction bar 3 in which one end portion is arranged in the vicinity of the arc generation region and the other end portion is made of the magnetic body that is surface-joined to one magnetic pole surface of the magnet 4. With the aforementioned configuration, the arc A is extended along the longitudinal side surface of the suction bar 3 that is the magnetic body by the magnetic field generated by the magnet 4.

Hereinafter, the configuration and the operation of the switch device 100 will be described in more detail with reference to FIG. 1 and FIG. 2. In FIG. 1, the switch device 100 includes: a fixed side terminal portion 11 and a movable side terminal portion 12, which are connected to an external electric power circuit, are provided on both end portions of a housing configured by a case 101 made of insulation material; and an arc extinguishing chamber 102, in which the fixed contact point 1a is arranged at one end and the magnet 4 is arranged at the other end, is provided in lower portion in order to extinguish the arc. The arc extinguishing chamber 102 is arranged with: the fixed contact 1 which is integrally formed with the fixed side terminal portion 11 and is provided with the fixed contact point 1a at a predetermined portion; the movable contact 2 which has the movable contact point 2a that is connected to and separated from the fixed contact point 1a and is provided so as to pivot; the suction bar 3 in which one end portion is made of a long-sized magnetic body arranged in the vicinity of the arc generation region so as to be opposite a space sandwiched between the fixed contact 1 and the movable contact 2; and the magnet 4 which is adjacent (surface-joined) to the suction bar 3 so that the magnetic pole surface is opposite the other end portion of the suction bar 3, that is, the end surface of the other end portion of the suction bar 3 on the reverse side to the surface opposite the arc A generated between both contact points of the fixed contact point 1a and the movable contact point 2a, and makes the arc drive along the peripheral side surface of the suction bar 3. Incidentally, reference numeral 15 denotes a flexible conductor.

Incidentally, the suction bar 3 can obtain similar effects even in the case of using shapes, such as a round bar or a bar having a rectangular parallelepiped, a cylindrical shape, or a polygonal shape; and the suction bar 3, as to be described later, is protected by an insulation cover for the magnetic body 3c provided so as to be opposite the generation region of the arc A having a current conduction direction on the front of the page space; and a magnetic reinforcement plate 6 (to be described later) is mounted on the magnet 4. Other configuration of portions not shown in the drawing is similar to those, for example, the prior art of Patent Document 1.

Next, as for the extinguishing principle of an arc, development stages coming to arc extinction will be described by dividing into five stages of (I) to (V) by means of a model of FIG. 2, in which the end surface on the reverse side to the arc generation position of the suction bar 3 protected by the insulation cover for the magnetic body 3c is surface-joined to the magnetic pole surface of the permanent magnet 41 having an N-pole.

In FIG. 2, first, in the development stage of arc extinction (I), a line of magnetic force M generated from the permanent magnet 41 is guided by the suction bar 3 and an interlinkage magnetic field to an arc is generated from the end of the suction bar 3 toward the arc. A Lorentz force acts on the arc by the interlinkage magnetic field and the arc is driven in the lower direction of FIG. 2. Next, in the development stage of arc extinction (II), the line of magnetic force M formed so as to sneak around the S-pole side of the permanent magnet 41 from the end of the suction bar 3 is interlinked with the arc driven in the stage of (I). The arc is pulled into an arc extension space expanded in a longitudinal side surface portion of the suction bar by the interlinkage magnetic field.

Next, in the development stage of arc extinction (III), the arc pulled in the arc extension space is further deeply pulled by the line of magnetic force M generated on a normal line from the side surface of the suction bar 3. The more deeply the arc is drawn, the more the magnetic field strength generated from the side surface of the suction bar 3 is enhanced; and therefore, detachment of the arc from the suction bar 3 becomes difficult and the arc can be stably extended to the deep side (the right side) of the suction bar 3. Furthermore, the line of magnetic force, which is interlinked with the deeply drawn arc, includes many lines of magnetic force to be sneaked around the S-pole side of the permanent magnet 41; and the interlinkage magnetic field by the lines of magnetic force of this direction (the right direction of the drawing) brings about a force that pulls the arc to the inside of the suction bar 3.

Next, in the development stage of arc extinction (IV), the Lorentz force that presses to the inside of the suction bar 3 by a stronger force acts on the arc adjacent to the insulation cover for the magnetic body 3c that protects the suction bar 3. This compresses the arc toward the insulation cover for the magnetic body 3c and rapidly enhances internal resistance of the arc. Then, ablation gas generated by the heat of the arc is blown from a surface, which is exposed to the arc, of the insulation cover for the magnetic body 3c toward the arc; and this cools the arc and further enhances the internal resistance of the arc.

Finally, in the development stage of arc extinction (V), when a concave narrow gap 3e shown in the drawing is provided at a part of the insulation cover for the magnetic body 3c, the arc is pulled to the inside of the narrow gap 3e by the Lorentz force that presses to the inside of the suction bar 3 and the arc is thinly contracted. The ablation gas by the insulation cover for the magnetic body 3c is blown from the periphery of the further contracted arc and resistance is enhanced until its conductivity cannot be maintained in the inside of the arc to come to arc extinction.

Incidentally, according to the above configuration, similar effects are exhibited even when the current conduction direction is opposite; and in the respective development stages of arc extinction, the arc is extended so as to be symmetric to the axis of the suction bar 3 as shown in FIG. 2. Furthermore, similar effects can be obtained even when the direction of the magnetic pole surface of the permanent magnet 41 (or the magnet 4) is opposite; the arc is extended so as to be symmetric to the axis of the suction bar 3 in the respective development stages of arc extinction.

As described above, the arc can be driven and extended in the same direction by using the suction bar 3 and the permanent magnet 41 (or the magnet 4) and interruption reliability can be enhanced without increasing in size of the switch device.

Incidentally, in the switch device of FIG. 1, more effects are exhibited by adding the following members in addition to the above basic configuration.

First, the switch device is provided with the arc extension space portion and the permanent magnet (or magnet) is arranged in the arc extension space portion; and thus, the length capable of extending the arc can be expanded and the arc resistance can be further enhanced.

Furthermore, the magnetic reinforcement plate 6 made of the magnetic body is provided on the magnetic pole surface of the permanent magnet 41 (or the magnet 4) on the opposite side (opposite to the suction bar), which is not adjacent (surface-joined) to the suction bar 3; and thus, magnetic resistance of a magnetic circuit, which is formed by the line of magnetic force circulated around the periphery of the permanent magnet 41 (or the magnet 4) via the suction bar 3, is decreased. Therefore, magnetic field strength generated from the surface of the suction bar 3 is enhanced and arc extinguishing performance can be further enhanced.

Furthermore, the magnet 4 that is used in the configuration of FIG. 1 is made up of the permanent magnet 41; and thus, constant magnetic flux can be acted on the arc. Therefore, stable interruption can be performed even in a current region (for example, less than 1 kA) in which magnetic flux generated from a current conduction conductor is weak.

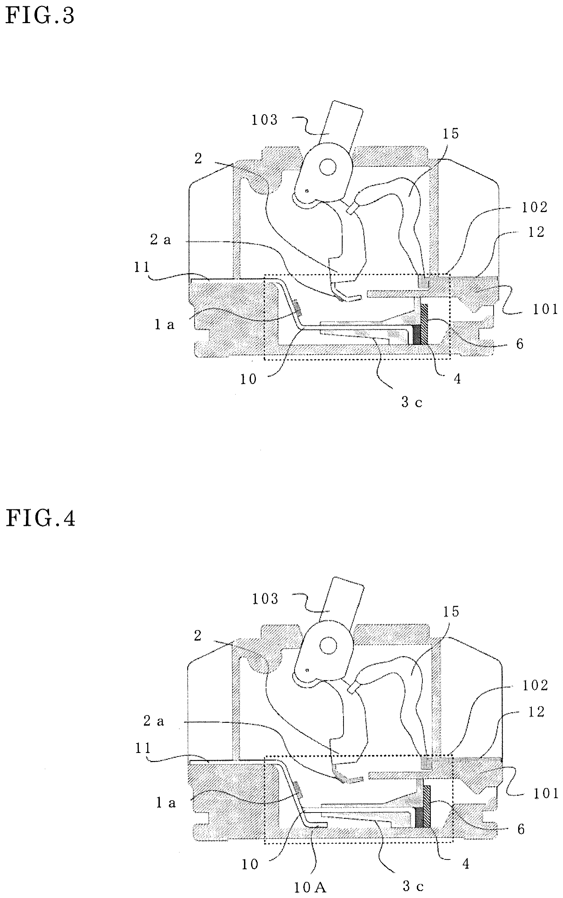

Next, Embodiment 1 of the present invention will be described based on FIG. 3.

FIG. 3 is a sectional side view schematically showing the relevant part configuration of the arc extinguishing chamber portion in an open-contact state of the switch device in Embodiment 1 of the present invention. The switch device of Embodiment 1 of the present invention uses the aforementioned configuration of FIG. 1 as the basic configuration and the fixed contact and the suction bar that is the long magnetic body are integrally molded with magnetic material to serve the fixed contact as a suction bar integrated contact (hereinafter, also merely referred to as an "integrated contact") 10. In other words, it shows that the suction bar integrated contact 10 comes into contact with the magnetic pole surface of the magnet 4 at one end portion and is formed with the function of the fixed contact 1 at the other end portion. More specifically, the suction bar integrated contact 10 is such that an end portion on the suction bar 3 side in the fixed contact 1 and the other end portion of the suction bar 3 are integrated. Incidentally, other configuration is similar to the switch device of FIG. 1 and therefore their description will be omitted.

According to the thus configured switch device of Embodiment 1 of the present invention, in addition to the operational advantages described in the device of FIG. 1, the fixed contact and the suction bar are integrally molded; and thus, not only the number of components can be reduced, but also the line of magnetic force generated from the magnet can be efficiently guided to the vicinity of the fixed contact point. Therefore, an effect exists in that the arc generated during open-contact is promptly driven and extended and the contact points can be suppressed from being worn.

Incidentally, in the configuration of the integrated contact in which the suction bar and the fixed contact are integrally molded, the movable contact may also be formed with magnetic material. Both fixed and movable contacts are formed with the magnetic material and are integrally molded with the suction bar; and thus, attractive force by magnetic force generated from the magnet acts between both contacts during close-contact and a chattering phenomenon that causes wear of the contact points, which is generated during close-contact, can be suppressed.

### Embodiment 2.

Next, Embodiment 2 of the present invention, which is a modified example of Embodiment 1, will be described based on FIG. 4. Embodiment 2 is made such that, in addition to the configuration provided with the suction bar integrated contact 10 of Embodiment 1, in which the suction bar and the fixed contact are integrally molded, an arc commutation portion 10A that is branched from the suction bar integrated contact 10 is provided and the arc is made to extend along the longitudinal side surface of the suction bar from the arc commutation portion 10A in order to commutate and maintain the arc.

According to Embodiment 2, the arc can be held at a position apart from the fixed contact point 1a; and therefore, the contact points are suppressed from being worn and contact reliability of the contact points can be enhanced. Furthermore, even when the arc extended by the effect of the present invention causes dielectric breakdown to be short-circuited between the suction bar integrated contact 10 and the movable contact 2, the short circuit occurs between the arc commutation portion 10A and the movable contact 2; and therefore, the arc can be prevented from being turned back to between both contact points 1a and 2a and interruption performance can be stabilized.

### Embodiment 3.

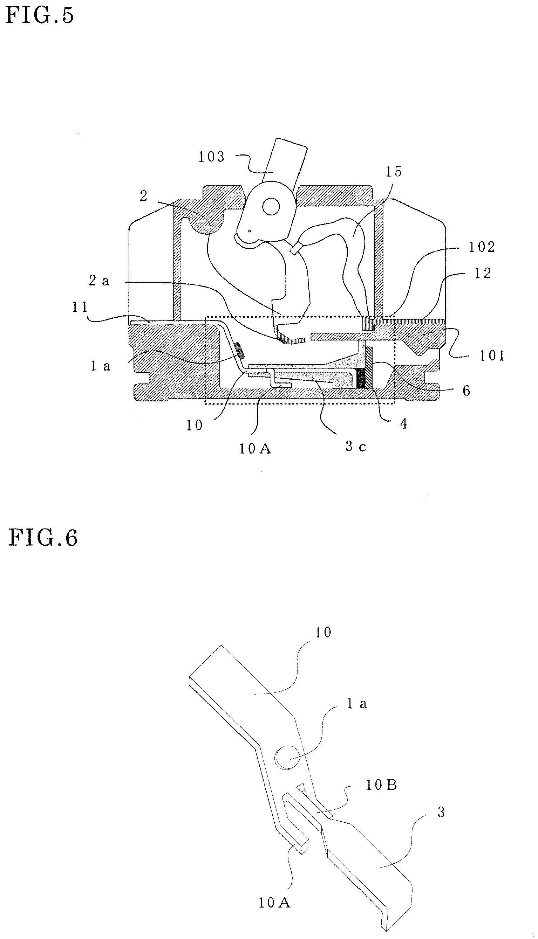

Next, Embodiment 3 of the present invention, which is a modified example of Embodiment 2, will be described based on FIG. 5. In Embodiment 3, an arc commutation portion 10A is provided so as to be exposed from an insulation cover for a magnetic body 3c.

According to Embodiment 3, insulating ablation gas is jetted by the heat of an arc from the insulation cover for the magnetic body 3c around the arc commutation portion 10A and is filled, internal resistance of the arc can be more enhanced, and a possibility of a short-circuit between both contact points 10 and 2 can be considerably suppressed.

### Embodiment 4.

Next, Embodiment 4 of the present invention, which is a modified example of the suction bar integrated contact shown in Embodiment 2, will be described based on FIG. 6.

In Embodiment 4, a reduction portion 10B, in which sectional area placed between the fixed contact point 1a and the magnetic pole surface of the magnet 4 (see FIG. 4) is partly reduced, is provided in the suction bar integrated contact 10.

According to Embodiment 4, lines of magnetic force generated from the magnet are thickened at the reduction portion 10B and electromagnetic force that acts on an arc can be strengthened in a space around the reduction portion 10B.

Furthermore, the reduction portion 10B is arranged in the vicinity of the fixed contact point 1a; and thus, an arc generated just after contact points are separated can be promptly moved to the magnet side. Therefore, the contact points can also be suppressed from being worn.

### Embodiment 5.

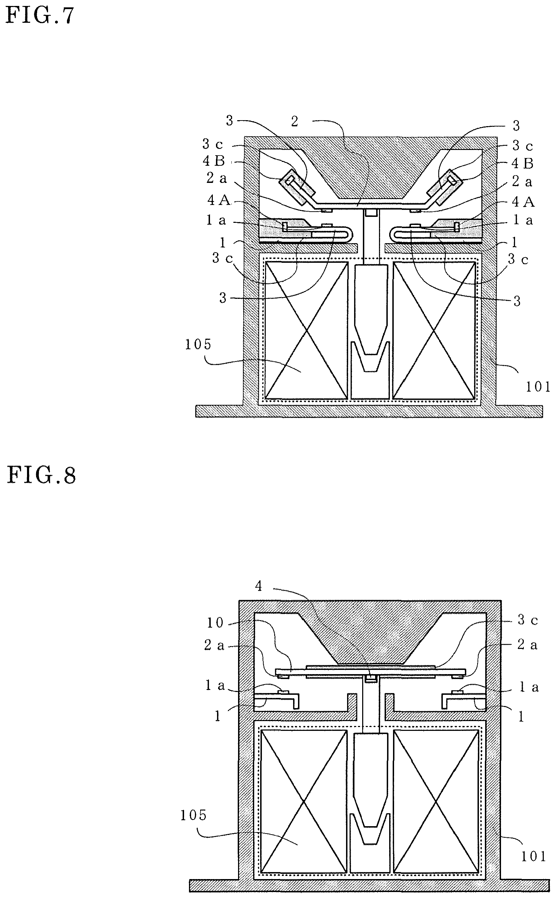

Next, an arc extinguishing chamber of a switch device in Embodiment 5 of the present invention will be described based on FIG. 7. The arc extinguishing chamber of the switch device in Embodiment 5 is an application example in the case where there exists a plurality of arc extinguishing spaces in one phase.

In FIG. 7, two arc extinguishing spaces and an electromagnetic actuator portion 105 are incorporated in the inside of a case 101. Each of the arc extinguishing spaces is provided with: two magnets 4A and 4B; two suction bars 3, one of which is surface-joined to the magnetic pole surface of the magnet 4A and is extended between a fixed contact 1 and the magnet 4A, and the other of which is surface-joined to the magnetic pole surface of the magnet 4B and is extended between a movable contact 2 and the magnet 4B; two insulation covers 3c which protect the magnets 4A and 4B and the suction bars 3; the movable contact 2 having a movable contact point 2a; and the fixed contact 1 having a fixed contact point 1a. Both contacts 1 and 2 and the suction bars 3 are integrally molded with magnetic material, respectively, to provide a suction bar integrated fixed contact and a suction bar integrated movable contact. Then, a configuration is made such that the movable contact 2 can be open-contacted by operating the electromagnetic actuator portion 105 from an external circuit (not shown in the drawing).

According to Embodiment 5, an arc generated between both contact points 1a and 2a in each of two arc extinguishing spaces is extended toward the magnets 4A and 4B along the side surfaces of both integrated contacts. Then, after the arc is pulled and extended to the vicinity of arranged positions of the magnets, the arc is cooled by ablation gas from the insulation cover 3c to come to arc extinction.

Furthermore, the magnetic pole directions of the magnets 4A and 4B which are surface-joined to both integrated contacts are arranged in different directions; and thus, a chattering phenomenon generated during close-contact can be suppressed by an effect of attractive force by magnetic action that acts between both integrated contacts.

### Embodiment 6.

Next, Embodiment 6 that is a modified example of Embodiment 5 will be described based on FIG. 8.

In FIG. 8, in a suction bar integrated contact 10 arranged in a straddle fashion over two arc extinguishing spaces, a magnet 4 is surface-joined and arranged between the respective extinguishing spaces. Then, the suction bar integrated contact 10 is protected by an insulation cover 3c together with the magnet 4.

According to Embodiment 6, arcs generated in two arc extinguishing spaces can be simultaneously extended toward the magnet side by one magnet 4; and therefore interruption performance can be enhanced with a small number of components.

Incidentally, the present invention can combine the respective embodiments and appropriately modify and/or omit the respective embodiments, within the scope of the present invention.

### INDUSTRIAL APPLICABILITY

The present invention is suitable as switch devices, such as a switch element, a switch, a circuit breaker, an electromagnetic contactor, and a relay, which interrupts current.

### DESCRIPTION OF REFERENCE NUMERALS

A: Arc, M: Line of magnetic force,
1: Fixed contact, 1a: Fixed contact point,
2: Movable contact, 2a: Movable contact point,
11: Fixed side terminal portion,
12: Movable side terminal portion,
15: Flexible conductor, 3: Suction bar,
3c: Insulation cover for magnetic body,
3e: Concave narrow gap, 4, 4A, 4B: Magnet,
41: Permanent magnet,
6: Magnetic reinforcement plate,
10: Suction bar integrated contact,
10A: Arc commutation portion,
10B: Reduction portion, 100: Switch device,
101: Case, 102: Arc extinguishing chamber,
103: Opening/closing mechanism portion,
105: Electromagnetic actuator portion.

## Claims

1. A switch device (100) comprising:
a fixed contact (1) having a fixed contact point (1a);
a movable contact (2) having a movable contact point (2a);
an opening/closing mechanism portion (103) that performs the opening/closing operation of said fixed contact point (1a) and said movable contact point (2a); and
a magnet (4); **characterized by**
an elongated magnetic body (3) having two opposing end portions which comes into contact with the magnetic pole surface of said magnet (4) at one end portion and is extended between said magnet (4) and at least either one of said fixed contact (1) and said movable contact (2) at its other end portion,
wherein at least either one of said fixed contact (1) and said movable contact (2) is integrally molded with said magnetic body (3) with magnetic material, thereby providing a suction bar integrated contact (10).

2. The switch device according to claim 1,
wherein both of said fixed contact (1) and said movable contact (2) are formed with magnetic material.

3. The switch device according to claim 1 or claim 2,
further comprising an arc commutation portion (10A) that is branched from said suction bar integrated contact (10).

4. The switch device according to any one of claim 1 to claim 3,
wherein said suction bar integrated contact (10) is formed with a reduction portion in which sectional area between the surface coming into contact with said magnet (4) and said fixed contact point or said movable contact point is partly reduced.

5. The switch device according to any one of claim 1 to claim 4,
further comprising an arc extinguishing chamber (102) in which said fixed contact point (1a) is arranged at one end and said magnet (4) is arranged at the other end.

6. The switch device according to any one of claim 1 to claim 5,
wherein said magnet (4) generates a magnetic field to extend an arc generated between said fixed contact (1) and said movable contact (2) when said fixed contact point and said movable contact point are separated; and the arc is extended along the longitudinal side surface of said magnetic body.

7. The switch device according to claim 3,
wherein said magnet (4) generates a magnetic field to extend an arc generated between said fixed contact (1) and said movable contact (2) when said fixed contact point and said movable contact point are separated; and the arc is extended along the longitudinal side surface of said magnetic body from said arc commutation portion.

## Patentansprüche

1. Schaltvorrichtung (100), die aufweist:
einen feststehenden Kontaktträger (1) mit einem feststehenden Kontakt (1a),
einen beweglichen Kontaktträger (2) mit einem beweglichen Kontakt (2a),
einen Teil (103) eines Öffnen/Schließen-Mechanismus, der den Vorgang zum Öffnen bzw. Schließen von feststehendem Kontakt (1a) und beweglichem Kontakt (2a) vollzieht, und
einen Magneten (4),
**gekennzeichnet durch**
einen länglichen magnetischen Körper (3) mit zwei einander gegenüberliegenden Endbereichen, der an einem der Endbereiche die Magnetpoloberfläche des Magneten (4) berührt und sich zwischen dem Magneten (4) und dem feststehenden Kontaktträger (1) und/oder dem beweglichen Kontaktträger (2) an seinem anderen Endbereich erstreckt,
wobei der feststehende Kontaktträger (1) und/oder der bewegliche Kontaktträger (2) integral mit dem magnetischen Körper (3) aus magnetischem Material geformt sind, wodurch ein integrierter Saugkontaktträger (10) vorliegt.

2. Schaltvorrichtung nach Anspruch 1,
wobei sowohl der feststehende Kontaktträger (1) als auch der bewegliche Kontaktträger (2) aus magnetischem Material gebildet sind.

3. Schaltvorrichtung nach Anspruch 1 oder Anspruch 2,
die ferner einen Lichtbogenableitbereich (10A) aufweist, der von dem integrierten Saugkontaktträger (10) abzweigt.

4. Schaltvorrichtung nach einem der Ansprüche 1 bis 3,
wobei der integrierte Saugkontaktträger (10) mit einem Verjüngungsbereich ausgebildet ist, an dem der Querschnittsbereich zwischen der den Magneten (4) berührenden Oberfläche und dem feststehenden Kontakt oder dem beweglichen Kontakt teilweise verjüngt ist.

5. Schaltvorrichtung nach einem der Ansprüche 1 bis 4,
die ferner eine Lichtbogenlöschkammer (102) aufweist, an deren einem Ende der der feststehende Kontakt (1a) angeordnet ist und an deren anderem Ende der Magnet (4) angeordnet ist.

6. Schaltvorrichtung nach einem der Ansprüche 1 bis 5,
wobei der Magnet (4) ein magnetisches Feld erzeugt, um einen beim Trennen des feststehenden Kontakts und des beweglichen Kontakts zwischen dem feststehenden Kontaktträger (1) und dem beweglichen Kontaktträger (2) erzeugten Lichtbogen zu strecken, und
der Lichtbogen entlang der längsseitigen Oberfläche des magnetischen Körpers gestreckt wird.

7. Schaltvorrichtung nach Anspruch 3,
wobei der Magnet (4) ein magnetisches Feld erzeugt, um einen beim Trennen des feststehenden Kontakts und des beweglichen Kontakts zwischen dem feststehenden Kontaktträger (1) und dem beweglichen Kontaktträger (2) erzeugten Lichtbogen zu strecken, und
der Lichtbogen von dem Lichtbogenableitbereich entlang der längsseitigen Oberfläche des magnetischen Körpers gestreckt wird.

## Revendications

1. Dispositif de commutation (100) comprenant:
un contact fixe (1) ayant un point de contact fixe (1a);
un contact mobile (2) ayant un point de contact mobile (2a);
une partie de mécanisme d'ouverture/fermeture (103) qui exécute l'opération d'ouverture/fermeture dudit point de contact fixe (1a) et dudit point de contact mobile (2a); et
un aimant (4); **caractérisé par**
un corps magnétique allongé (3) ayant deux parties d'extrémité opposées qui vient en contact avec la surface de pôle magnétique dudit aimant (4) sur une partie d'extrémité et s'étend entre ledit aimant (4) et au moins un parmi ledit contact fixe (1) et ledit contact mobile (2) sur son autre partie d'extrémité,
dans lequel au moins un parmi ledit contact fixe (1) et ledit contact mobile (2) est moulé d'un seul tenant avec ledit corps magnétique (3) avec un matériau magnétique, en fournissant ainsi un contact intégré de barre d'aspiration (10).

2. Dispositif de commutation selon la revendication 1,
dans lequel à la fois ledit contact fixe (1) et ledit contact mobile (2) sont formés avec un matériau magnétique.

3. Dispositif de commutation selon la revendication 1 ou la revendication 2, comprenant en outre une partie de commutation d'arc (10A) qui bifurque dudit contact intégré de barre d'aspiration (10).

4. Dispositif de commutation selon l'une quelconque des revendications 1 à 3, dans lequel ledit contact intégré de barre d'aspiration (10) est formé avec une partie de réduction dans laquelle une aire de section entre la surface venant en contact avec ledit aimant (4) et ledit point de contact fixe ou ledit point de contact mobile est partiellement réduite.

5. Dispositif de commutation selon l'une quelconque des revendications 1 à 4, comprenant en outre une chambre d'extinction d'arc (102) dans laquelle ledit point de contact fixe (1a) est agencé à une extrémité et ledit aimant (4) est agencé à l'autre extrémité.

6. Dispositif de commutation selon l'une quelconque des revendications 1 à 5, dans lequel ledit aimant (4) génère un champ magnétique pour étendre un arc généré entre ledit contact fixe (1) et ledit contact mobile (2) lorsque ledit point de contact fixe et ledit point de contact mobile sont séparés; et
l'arc s'étend le long de la surface latérale longitudinale dudit corps magnétique.

7. Dispositif de commutation selon la revendication 3,
dans lequel ledit aimant (4) génère un champ magnétique pour étendre un arc généré entre ledit contact fixe (1) et ledit contact mobile (2) lorsque ledit point de contact fixe et ledit point de contact mobile sont séparés; et
l'arc s'étend le long de la surface latérale longitudinale dudit corps magnétique à partir de ladite partie de commutation d'arc.
